# DEMANDE DE BREVET EUROPEEN

(11) **EP 1 950 024 A1**
(43) Date de publication de la demande: **30.07.2008**
(21) Numéro de dépôt: 08150422.7
(22) Date de dépôt: 18.01.2008
(51) Int. Cl.: B29C 45/00, B60R 13/08, B60R 21/34, F02B 77/13, G10K 11/162

(54) **Ecran de protection pour piéton obtenue par soudure de matière**

(30) Priorité: 25.01.2007 FR 0752890
(71) Demandeur: Peugeot Citroën Automobiles S.A., 78140 Vélizy Villacoublay (FR)
(72) Inventeur: Monin, Martine, 92000 Nanterre (FR); Bechu, Laurent, 92130 Issy les Moulineaux (FR); Massieux, Michael, 51000 Chalons en Champagne (FR); Doulat, Anne, 95800 Cergy (FR)
(74) Mandataire: Ménès, Catherine

(57) **Abrégé**

L'invention se rapporte à un procédé de fabrication d'un écran (1) de protection apte à être placé entre le moteur (2) et le capot d'un véhicule automobile pour amortir un choc piéton.

La principale caractéristique d'un procédé selon l'invention, est qu'il consiste à injecter simultanément, à partir de plusieurs points d'injection, plusieurs flux de matière liquide, destinés à migrer les uns vers les autres, lesdits flux étant amenés à fusionner en formant des lignes (7) de soudure, lesdites lignes (7) constituant des zones de faiblesse structurelle pour l'écran (1).

## Description

Le domaine technique de l'invention concerne les écrans de protection situés entre le moteur d'un véhicule automobile et le capot, et servant de couche intermédiaire pour amortir l'impact de la tête d'un piéton sur le moteur, suite à un choc accidentel. En effet, dans une certaine plage de vitesses, la collision entre un véhicule et un piéton entraîne le pivotement dudit piéton, dont la tête vient percuter le capot sous lequel est logé le moteur. Le capot se déforme sous l'impact, et la tête vient alors heurter le moteur, constituant une pièce lourde et indéformable, augmentant considérablement les risques de fracture du crâne. L'invention se rapporte à un procédé de fabrication consistant à élaborer un écran de protection, constitué par des zones de faiblesse structurelle issues de la soudure de flux de matière convergents. Selon une variante de réalisation, l'invention consiste à adapter, au moyen de ce type de procédé, une pièce déjà existante sur le moteur, et occupant une fonction bien particulière au sein dudit moteur, pour la transformer en un écran de protection vis-à-vis d'un piéton, sans pour autant dénaturer sa fonction originelle. Il s'agit, plus précisément, d'un écran de protection pour le système d'injection, servant, notamment, à contenir le bruit que produit ledit système, et à éviter les projections de gazole sous le capot moteur en cas de fuite dudit gazole.

Les écrans de protection vis-à-vis d'un choc piéton existent et ont déjà fait l'objet de brevets. On peut, par exemple, citer le brevet W02006051072 qui se rapporte à un système sous capot qui se déforme en cas de choc piéton. De même, Le brevet W0200176915 décrit un système avec une pièce composite qui est fragilisée en cas de choc avec un piéton.
Toutefois, il n'existe pas de brevets se rapportant à des procédés de fabrication d'écrans de protections, présentant des zones de faiblesses structurelles obtenues par des soudures, issues de la fusion de flux de matière convergents.

Les procédés de fabrication selon l'invention permettent d'élaborer des écrans de protection munis de zones de faiblesse structurelle, obtenues sans outillage particulier et sans étape spécifique, consacrée à leur élaboration. Ces procédés de fabrication sont donc rapides, fiables et peu couteux. Les écrans de protection issus de ces procédés, peuvent ainsi présenter une multitude de zones de faiblesses, positionnées en plusieurs endroits et suivant plusieurs directions.

La présente invention a pour objet un procédé de fabrication d'un écran de protection apte à être placé entre le moteur et le capot d'un véhicule automobile pour amortir un choc piéton. La principale caractéristique d'un procédé selon l'invention, est qu'il consiste à injecter simultanément, à partir de plusieurs points d'injection, plusieurs flux de matière liquide, destinés à migrer les uns vers les autres, lesdits flux étant amenés à fusionner en formant des lignes de soudure, lesdites lignes constituant des zones de faiblesse structurelle pour l'écran. Il s'agit essentiellement d'un procédé de moulage, mettant donc en jeu un moule, muni de plusieurs points d'injection ayant des positions parfaitement identifiées pour pouvoir injecter de la matière liquide, de manière à ce que les flux ainsi engendrés se rencontrent à des endroits prédéterminés pour se souder. Ainsi, en fonction de la position des points d'injection, l'écran pourra être doté d'une ou plusieurs zones de faiblesse structurelle.

Avantageusement, le procédé consiste à injecter simultanément, à partir de deux points d'injection, deux flux de matière liquide, destinés à migrer l'un vers l'autre, lesdits flux étant amenés à fusionner en formant une ligne de soudure, ladite ligne constituant une zone de faiblesse structurelle pour l'écran. Il s'agit de la configuration pour laquelle l'écran de protection ne possède qu'une seule zone de faiblesse structurelle.

De façon préférentielle, les flux de matière sont de même composition.

Selon un autre mode de réalisation préféré de l'invention, les flux de matière ont des compositions différentes. La mise au contact par soudure de deux matériaux ayant des compositions différentes, va avoir un impact direct sur la qualité de la soudure, et donc, sur sa capacité à se rompre.

De façon avantageuse, le procédé met en jeu un moule possédant une assise périphérique et une protubérance, ledit moule étant muni d'un point d'injection sur la protubérance, et d'au moins un autre point d'injection sur l'assise, de manière à ce que la ligne de soudure se produise au niveau de la zone de jointure entre ladite protubérance et ladite assise.

L'invention porte également sur un écran de protection destiné à être placé entre le moteur et le capot d'un véhicule automobile pour amortir un choc de piéton, ledit écran étant fabriqué à partir d'un procédé selon l'invention. De cette manière, l'écran peut se rompre au niveau de ses lignes de soudure, sous l'effet d'une sollicitation extérieure de type choc piéton.

Avantageusement, l'écran s'étend sur le système d'injection du moteur. Pour cette configuration, l'écran joue aussi un rôle de protection vis-à-vis du système d'injection. En effet, il permet à la fois de réduire le bruit du système d'injection et d'éviter les projections de gazole en cas de fuite. Cet écran, qui est fabriqué à partir du procédé selon l'invention, possède une fonction dédiée à la protection d'un piéton, et deux fonctions dédiées à la protection du système d'injection.

Puisque les procédés de fabrication selon l'invention concernent essentiellement la technique du moulage, ils sont donc largement éprouvés, et présentent, par voie de conséquence, un caractère de grande fiabilité et de grande reproductibilité. Ils présentent, en plus, l'avantage d'être faciles à mettre en oeuvre, dans la mesure où ils ne nécessitent pas la mise en place de pièces supplémentaires.

On donne ci-après une description détaillée d'un mode de réalisation préféré d'un écran de protection selon l'invention, ainsi que du procédé de fabrication associé, en se référant aux figures 1 à 2.
- La figure 1 est une vue en perspective d'un écran de protection selon l'invention placé sur un moteur de véhicule automobile.
- La figure 2 est une vue partielle et simplifiée d'un moule dans lequel les deux flux de matière se dirigent l'un vers l'autre, pour former une ligne de soudure au niveau de la jointure entre la protubérance et l'assise de l'écran.

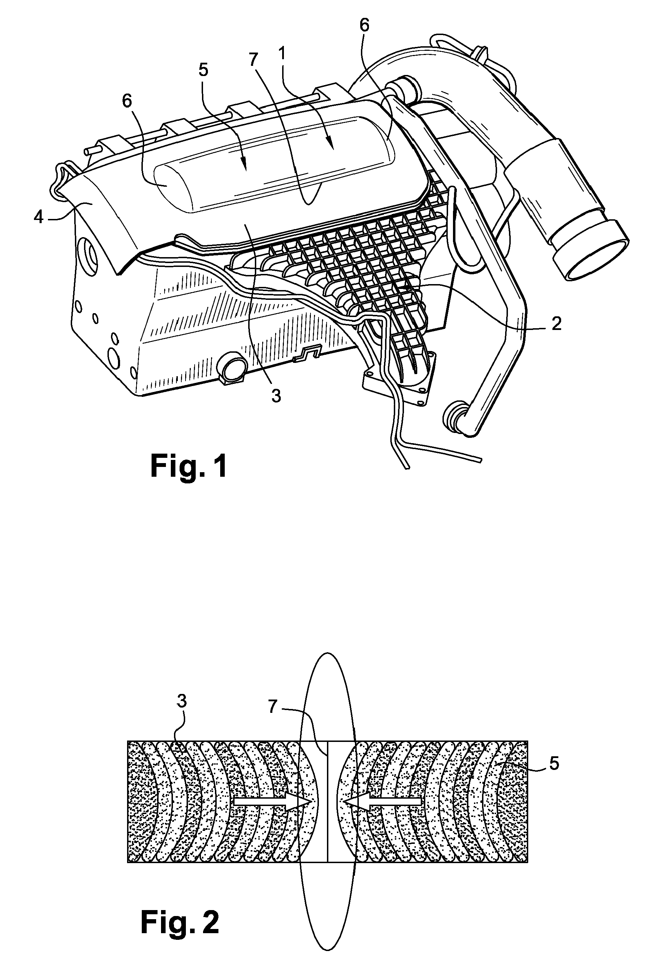

En se référant à la figure 1, un écran 1 de protection selon l'invention est placé en partie haute d'un moteur 2 de véhicule automobile, sur le système d'injection, et en dessous du capot (non représenté). L'écran 1 a la forme d'une pièce globalement plane, recouvrant partiellement ledit moteur 2. De façon plus précise, l'écran 1 possède une assise 3 plane, directement au contact du moteur 2, ladite assise 3 pouvant présenter des rebords 4 incurvés pour épouser au mieux le contour externe du moteur 2, et ainsi être en contact étroit avec celui-ci. L'assise 3 a un contour sensiblement rectangulaire, et entoure une protubérance 5 bombée, située approximativement dans la partie centrale de ladite assise 3. La protubérance 5 émerge de l'assise 3 et se retrouve plus proche du capot que ne l'est ladite assise 3. La protubérance 5 est assimilable à une pièce creuse, de forme allongée et possédant deux extrémités 6 arrondies.

En se référant à la figure 2, l'écran 1 est issu d'un procédé de moulage, mettant en oeuvre un moule, permettant de fabriquer simultanément la protubérance 5 et l'assise 3. Le moule possède un point d'injection situé sur sa partie arrondie servant à former la protubérance 5, et au moins un point d'injection situé sur sa partie plane servant à former l'assise 3. Au moment de la fabrication de l'écran 1, les flux progressent l'un vers l'autre, en sens opposé, jusqu'à se rejoindre au niveau de la jointure 7 entre la protubérance 5 et l'assise 3. Ils se soudent alors l'un à l'autre, donnant naissance à une jointure fragilisée 7, apte à céder sous l'effet d'un choc extérieur comme, par exemple, un choc piéton.

Lors d'un choc entre un véhicule et un piéton, l'écran 1 de protection réagit de la façon suivante :
Le piéton pivote, et vient percuter, tête la première, le capot avant du véhicule. La tête déforme d'abord le capot, et vient ensuite impacter la protubérance 5 bombée de l'écran 1 de protection, ladite protubérance 5 se découpant sous l'impact du choc, suivant la ligne 7 de soudure. Le choc est ainsi absorbé par la protubérance 5 qui se détache de son assise périphérique 3.

## Revendications

1. Procédé de fabrication d'un écran (1) de protection apte à être placé entre le moteur (2) et le capot d'un véhicule automobile pour amortir un choc piéton, **caractérisé en ce qu'**il consiste à injecter simultanément, à partir de plusieurs points d'injection, plusieurs flux de matière liquide, destinés à migrer les uns vers les autres, lesdits flux étant amenés à fusionner en formant des lignes (7) de soudure, lesdites lignes (7) constituant des zones de faiblesse structurelle pour l'écran (1).

2. Procédé selon la revendication 1, **caractérisé en ce qu'**il consiste à injecter simultanément, à partir de deux points d'injection, deux flux de matière liquide, destinés à migrer l'un vers l'autre, lesdits flux étant amenés à fusionner en formant une ligne (7) de soudure, ladite ligne (7) constituant une zone de faiblesse structurelle pour l'écran (1).

3. Procédé selon l'une quelconque des revendications 1 ou 2, **caractérisé en ce que** les flux de matière sont de même composition.

4. Procédé selon l'une quelconque des revendications 2 ou 3, **caractérisé en ce qu'**il met en jeu un moule possédant une assise (3) périphérique et une protubérance (5), ledit moule étant muni d'un point d'injection sur la protubérance (5), et d'au moins un autre point d'injection sur l'assise (3), de manière à ce que la ligne de soudure se produit au niveau de la zone de jointure (7) entre ladite protubérance (5) et ladite assise (3).

5. Ecran (1) de protection destiné à être placé entre le moteur (2) et le capot d'un véhicule automobile pour amortir un choc de piéton, **caractérisé en ce qu'**il est fabriqué à partir d'un procédé conforme à l'une quelconque des revendications précédentes.

6. Ecran (1) selon la revendication 1, **caractérisé en ce qu'**il s'étend sur le système d'injection du moteur.
